# EUROPÄISCHE PATENTANMELDUNG

(11) **EP 2 181 951 A2**
(43) Veröffentlichungstag der Anmeldung: **05.05.2010**
(21) Anmeldenummer: 09174488.8
(22) Anmeldetag: 29.10.2009
(51) Int. Cl.: B65H 18/28

(54) **Schutzbeschichtung für Klebebandrollen**

(30) Priorität: 30.10.2008 DE 102008054030
(71) Anmelder: Silu Verwaltung AG, 6045 Meggen (CH)
(72) Erfinder:
(74) Vertreter: Bublak, Wolfgang

(57) **Zusammenfassung**

Die Erfindung betrifft ein Verfahren zum seitlichen Schützen von Klebebandrollen, wobei auf die Stirnseite der Klebebandrolle eine nicht selbstklebende Beschichtung aufgebracht wird. Als Beschichtungsmaterial wird ein Lack, eine Polymerdispersion, Wachs oder ein Pulver, z.B. Talkum, verwendet.

## Beschreibung

Die vorliegende Erfindung betrifft ein Verfahren zum seitlichen Schützen von Klebebandrollen, bei dem auf die Stirnseiten der Klebebandrollen eine nicht selbstklebende Beschichtung als Schutz aufgebracht wird, sowie die damit erhaltenen Klebebandrollen.

Allgemein gibt es Klebebandrollen, die einseitig oder zweiseitig selbstklebend sind. Solche Klebebandrollen können auf der Klebstoffschicht entweder eine klebstoffabweisende Abdeckung, einen sogenannten Releaseliner aus silikonisiertem Papier oder silikonisierter Folie haben, oder sie sind ohne Releaseliner in sich aufgewickelt. Der Releaseliner wird bei der Anwendung der Klebebandrolle abgezogen und weggeworfen. Einseitig klebende Klebebänder haben zusätzlich ein Trägermaterial, das im verarbeiteten Zustand die sichtbare obere Seite darstellt. Klebebandrollen haben auf beiden Seiten der Rolle jeweils eine sogenannte Stirnseite, an der gegebenenfalls das Trägermaterial, die Klebstoffschicht und gegebenenfalls der Releaseliner bündig sind. Industriell gefertigte Klebebänder werden meistens auf breiten Beschichtungsanlagen hergestellt und so geschnitten, dass gegebenenfalls das Trägermaterial, die Klebstoffschicht und gegebenenfalls der Releaseliner an beiden Stirnseiten bündig sind. Es besteht jedoch das Problem, dass im Laufe der Zeit die Klebstoffschicht leicht hervortreten kann und damit die Stirnseite selbstklebend wird. Dies führt dazu, dass Schmutz daran hängenbleibt, so dass die Klebebandrolle beispielsweise nicht mehr auf staubige Untergründe gelegt werden kann. Zudem kann es bei der späteren Verarbeitung oder beim Abziehen des Releaseliners zu Problemen kommen, insbesondere kann es zu Reißen des Releaseliners führen, da dieser durch Verletzungen und Benetzung der Stirnseiten durch austretenden Klebstoff verblocken kann.

Um diese Probleme zu umgehen, werden Klebebandrollen an den Stirnseiten in der Verpackung und während des Transports bis zur Verarbeitung durch seitlich angebrachte Papiere oder Folien geschützt, die teilweise mit einem klebstoffabweisenden Material beschichtet sind, um auf diese Weise keine starke Klebekraft zu der Stirnseite aufbauen zu können. Jedoch ist das Aufbringen solcher seitlichen Schutzfolien oder -papiere aufwändig und teuer, weil es an unterschiedliche Klebebandrollengrößen angepasst und auf beiden Stirnseiten der Klebebandrolle erfolgen muss. Meist werden solche seitlichen Schutzfolien noch von Hand aufgebracht, da automatische Aufbringsysteme oft unzuverlässig oder sehr aufwändig sind. Hinzu kommt, dass solche seitlichen Schutzfolien oder -papiere während des Transports oder der Lagerung sich verschieben oder sogar abfallen können und somit die Klebebandrollen miteinander verkleben können. Darüberhinaus können bei starkem Klebstoffaustritt an der Stirnseite und Verwendung von nicht oder schwach silikonisierten Schutzfolien die Klebebandrollen eine so starke Klebeverbindung mit diesen Schutzfolien eingehen, dass letztere vor der Verarbeitung nicht mehr entfernt werden können und die Klebebandrolle schwer zu verarbeiten ist.

Aufgabe der Erfindung war es deshalb, die oben beschriebenen Nachteile des Standes der Technik zu vermeiden und Klebebandrollen auf möglichst einfache Weise seitlich zu schützen.

Zur Lösung dieser Aufgabe wird erfindungsgemäß vorgeschlagen, die Klebebandrolle auf wenigstens einer Stirnseite mit einer nicht selbstklebenden Beschichtung zu versehen.

Somit betrifft die Erfindung ein Verfahren zum seitlichen Schützen von Klebebandrollen, wobei auf wenigstens eine Stirnseite der Klebebandrolle eine nicht selbstklebende Beschichtung aufgebracht wird. Als Beschichtungsmaterial eignen sich Lacke, Polymerdispersionen, Wachse oder ein zur Ausbildung von Beschichtungen geeignetes Pulver, wie Talkum, Kreide, Mehl, oder Pulver aus Kunststoffen. Daneben betrifft die Erfindung eine durch das erfindungsgemäße Verfahren erhältliche Klebebandrolle. Bevorzugte Ausführungsformen der Erfindung sind in der nachfolgenden Beschreibung und den Unteransprüchen definiert.

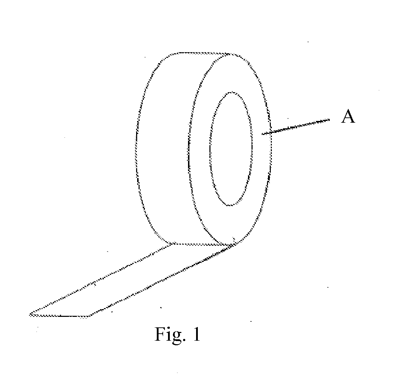

Die Figur zeigt eine Klebebandrolle, die auf der Stirnseite mit einer nicht selbstklebenden Beschichtung versehen ist.

Erfindungsgemäß wird eine nicht selbstklebende Beschichtung auf die Stirnseite der Klebebandrolle aufgebracht. Diese deckt die ganze Stirnseite, also gegebenenfalls das Trägermaterial mit der Klebstoffschicht und gegebenenfalls den Releaseliner bündig ab. Die Beschichtung ist nicht selbstklebend, sie kann also angefasst werden, ohne dass sie klebt und Schmutz an ihr haften bleibt. Zweckmäßigerweise ist die Beschichtung brüchig, so dass die Klebebandrolle problemlos abgewickelt und verarbeitet werden kann.

Die Selbstklebrigkeit bzw. Nicht-Selbstklebrigkeit der Beschichtung auf der Stirnseite kann gemäß der Norm ASTM D 2979-01 gemessen werden, wobei der Durchmesser des Edelstahlstempels 32 mm beträgt und die konstante Anfahrgeschwindigkeit auf die Probe bei 10 mm/min liegt. Mit einer solchen Messung liegen in einer bevorzugten Ausführungsform der Erfindung die Werte der Selbstklebrigkeit kleiner als 9 N, insbesondere kleiner als 6 N, bevorzugt kleiner als 2 N, und insbesondere bevorzugt kleiner als 1 N.

Als Beschichtungsmaterial eignen sich jegliche Lacke, Polymerdispersionen, Wachse oder ein zur Ausbildung von Beschichtungen geeignetes Pulver, wie Talkum, Kreide, Mehl, oder Pulver aus Kunststoffen wie aus z.B. Polyacrylaten, Polystyrol, Polyester, Polyamid, Polyurethan, Polyvinylchlorid, Polyolefinen, Polyvinylacetat, Polyisopren oder Poly(iso)butylen, PTFE, sowie Copolymere aus diesen, Polysiloxancopolymere.

In einer besonders bevorzugten Ausführungsform wird als Beschichtung ein Lack aufgebracht. Hierbei handelt es sich insbesondere um einen wässrigen Lack, einen lösemittelhaltigen Lack, oder einen Silikonlack. Das Bindemittel des Lacks kann in wässriger Phase, in Lösemittel oder als UV-vernetzendes System mit oder ohne Lösemittel zum Einsatz kommen. Daneben kann auch ein Lack verwendet werden, der durch Elektronenstrahlen aushärtet, also durch sogenannte Elektronen-Strahl-Härtung (EB-Curing). In einer bevorzugten Ausgestaltung wird ein Lack verwendet, der durch UV-Härtung oder Elektronen-Strahl-Härtung aushärtet. Zum Aufbringen des Lacks kann beispielsweise eine Polymerdispersion verwendet werden, die zur Ausbildung einer Lackschicht befähigt ist. Als Beispiele hierfür werden UV-vernetzende Lacke, Lösemittelsysteme oder wässrige Lacke genannt, ebenso können Pulverlacke zum Einsatz kommen, die nach dem Auftragen durch Hitze verfilmt werden oder Hotmelt-Systeme, die mit hohen Temperaturen aufgetragen werden und nach Abkühlung auf den Stirnseiten erstarren und damit die nicht klebende Schutzschicht ausbilden. Zum Aufbringen der Beschichtung wird das Ausgangsmaterial für den Lack mittels z.B. eines Walzensystems, Schaumstoffsystems oder in einem Sprühverfahren auf die Stirnseite der Klebebandrollen aufgetragen und getrocknet oder gehärtet. Die Trocknung kann über Zuführung von Warmluft erfolgen. Solche Beschichtungen auf Basis von Lack oder Polymerdispersion bieten den Vorteil, dass sie in Abhängigkeit vom verwendeten Lack oder Polymer über einen relativ großen Temperaturbereich anwendbar sind und damit auch bei warmen Temperaturen, z.B. 30 °C oder 40 °C gelagert werden können.

In einer anderen bevorzugten Ausführungsform wird zum Aufbringen der Beschichtung ein aufgeschmolzenes Ausgangsmaterial verwendet, wie ein aufgeschmolzenes Wachs oder ein aufgeschmolzenes Polymer, die bei Raumtemperatur keine selbstklebenden Eigenschaften aufweisen. Das Ausgangsmaterial wird durch z.B. ein Walzen- oder Sprühsystem aufgesprüht und durch Abkühlung, zweckmäßigerweise auf Raumtemperatur, ausgehärtet. Geeignete Ausgangsmaterialien zum Aufschmelzen sind Wachse, Thermoplaste, Harze, Hotmelts, Hotmelt-Acrylate. Diese Ausführungsform erlaubt ein sofortiges Verpacken der seitlich geschützten Klebebandrollen.

Die Schichtdicke der seitlichen Beschichtung auf der Klebebandrolle beträgt bei Aufbringen eines Lacks oder eines geschmolzenen Ausgangsmaterials 1 bis 1000g/m², bevorzugt 1,5 bis 500 g/m², noch bevorzugter 2 bis 200 g/m², am bevorzugtesten 2 bis 100 g/m². In einer anderen bevorzugten Ausführungsform beträgt die Schichtdicke 5 bis 100 g/m², insbesondere 10 bis 50 g/m². Die dünne Schichtdicke erlaubt, dass das Klebeband problemlos von der Rolle abgewickelt werden kann.

In einer weiteren bevorzugten Ausführungsform der Erfindung wird die Stirnseite der Klebebandrolle mit einem Pulver gleichmäßig ausgerüstet. Pulver, das das Klebeband berührt, bleibt hängen und schützt somit die Stirnseite der Klebebandrolle, während überschüssiges, loses Pulver abfällt und entfernt wird, z.B. durch Abblasen, Absaugen oder Abbürsten. Als Pulver für diese Ausführungsform eignen sich Pulver aus Kunststoffen. Weitere geeignete Pulver sind gefälltes oder natürliches Bariumsulfat, Titandioxid, Calciumcarbonat (z.B. Kreide), Kaolin, Talkum, Magnesium- oder Aluminiumhydroxid (letztere Hydroxide erlauben eine Einstellung der Brandklasse), Zinkoxid, Zirkoniumsalze, Glaskugeln oder Mikrohohlkugeln aller Art.

Die zu schützenden Klebebandrollen unterliegen keinen Beschränkungen. Es kann sich um Klebebandrollen aller Art handeln, die einseitig oder zweiseitig mit einer Selbstklebeschicht (Haftklebeschicht) versehen sind. Solche Klebebandrollen sind handelsüblich und in einer Vielzahl von Varianten in Abhängigkeit von der gewünschten Anwendung auf dem Markt erhältlich. Vorzugsweise handelt es sich um Klebebandrollen mit beidseitig klebendem Klebeband. Die Schutzbeschichtung wird auf mindestens eine Stirnseite der Klebebandrolle aufgebracht, vorzugsweise auf beide Stirnseiten.

Der erfindungsgemäße Beschichtungsvorgang findet nach der Herstellung der Klebebandrollen statt, zweckmäßigerweise vor der Verpackung der Klebebandrollen und/oder nach dem Schneideprozess, bei dem von einer Großrolle kleinere Klebebandrollen mit einer Breite und Länge entsprechend den Marktbedürfnissen abgerollt, abgeschnitten und anschließend verpackt werden.

In der Figur ist eine Klebebandrolle gezeigt, bei der erfindungsgemäß auf der gezeigten Stirnseite eine nicht selbstklebende Beschichtung A aufgebracht ist.

Somit ermöglicht die Erfindung auf einfache und industriell günstige Weise Klebebandrollen an ihren Stirnseiten zu schützen. Dies erlaubt die Verarbeitung der Klebebandrollen auch unter schwierigen Verarbeitungsbedingungen, z.B. Baustellen, die oft sehr staubig oder schmutzig sind.

Die Erfindung wird anhand des folgenden Beispiels erläutert, das eine bevorzugte Ausführungsform zeigt, ohne die Erfindung zu beschränken.

### Beispiel

Es wurde die Selbstklebrigkeit der Stirnseite einer Klebebandrolle ohne seitliche Beschichtung gemessen, anschließend die Stirnseite seitlich gemäß der Erfindung beschichtet und wiederum die Selbstklebrigkeit gemessen. Die Selbstklebrigkeit wurde jeweils gemäß ASTM D 2979-01 gemessen, wobei der Durchmesser des Edelstahlstempels 32 mm betrug und die konstante Anfahrgeschwindigkeit auf die Probe bei 10 mm/min lag.

Bei der untersuchten Klebebandrolle handelte es sich um Sicrall von der Fa. SIGA, eine stark klebende Klebebandrolle für das Verkleben von Dampfbremsen, die an den Stirnseiten mit seitlich angebrachten Schutzfolien geschützt ist. Die Schutzfolie wurde entfernt und die Selbstklebrigkeit an einer Stirnseite mit einem Wert von 40 N gemessen.

Die Klebebandrolle wurde an der Stirnseite mit Talkum durch Bestäuben und Abfallenlassen überschüssigen Pulvers ausgerüstet. Es wurde eine Selbstklebrigkeit von lediglich 0,4 N gemessen.

## Patentansprüche

1. Verfahren zum seitlichen Schützen von Klebebandrollen, **dadurch gekennzeichnet, dass** auf wenigstens eine Stirnseite der Klebebandrolle eine nicht selbstklebende Beschichtung aufgebracht wird.

2. Verfahren nach Anspruch 1, **dadurch gekennzeichnet, dass** zur Ausbildung der Beschichtung ein Material ausgewählt aus Lack, einer Polymerdispersion, Wachs oder einem zur Ausbildung von Beschichtungen geeigneten Pulver verwendet wird.

3. Verfahren nach Anspruch 2, **dadurch gekennzeichnet, dass** als Lack ein wässriger Lack, ein lösemittelhaltiger Lack, ein Silikonlack oder ein Lack, der durch UV-Härtung oder Elektronen-Strahl-Härtung aushärtet, verwendet wird.

4. Verfahren nach Anspruch 3, **dadurch gekennzeichnet, dass** die Beschichtung mittels eines Walzensystems oder Schaumstoffsystems oder durch Sprühen aufgetragen und getrocknet oder gehärtet wird.

5. Verfahren nach Verfahren nach Anspruch 1 oder 2, **dadurch gekennzeichnet, dass** zur Ausbildung der Beschichtung ein geschmolzenes Ausgangsmaterial, insbesondere ein aufgeschmolzenes Wachs oder Polymer, verwendet wird.

6. Verfahren nach Anspruch 5, **dadurch gekennzeichnet, dass** das geschmolzene Ausgangsmaterial aufgesprüht und durch Abkühlung gehärtet wird.

7. Verfahren nach einem der vorhergehenden Ansprüche, **dadurch gekennzeichnet, dass** die Dicke der Beschichtung 5 bis 100 g/m², insbesondere 10 bis 50 g/m² beträgt.

8. Verfahren nach einem der Ansprüche 1 bis 6, **dadurch gekennzeichnet, dass** die Dicke der Beschichtung 1 bis 1000 g/m², insbesondere 2 bis 100 g/m² beträgt.

9. Verfahren nach Anspruch 2, **dadurch gekennzeichnet, dass** als Pulver Talkum, Kreide, Mehl, oder ein Pulver aus Kunststoff ausgewählt aus Polyacrylaten, Polystyrol, Polyester, Polyamid, Polyurethan, Polyvinylchlorid, Polyolefinen, Polyvinylacetat, Polyisopren, Poly(iso)butylen, PTFE, Copolymeren aus diesen oder Polysiloxancopolymeren verwendet wird.

10. Verfahren nach Anspruch 9, **dadurch gekennzeichnet, dass** das Pulver aufgesprüht wird.

11. Verfahren nach einem der vorhergehenden Ansprüche, **dadurch gekennzeichnet, dass** eine Klebebandrolle mit beidseitig klebendem Klebeband verwendet wird.

12. Klebebandrolle erhältlich durch ein Verfahren gemäß einem der vorhergehenden Ansprüche.

13. Klebebandrolle nach Anspruch 12, **dadurch gekennzeichnet, dass** die Selbstklebrigkeit der Beschichtung kleiner als 9 N, insbesondere kleiner als 6 N, bevorzugt kleiner als 2 N, und insbesondere bevorzugt kleiner als 1 N ist, jeweils bei Messung gemäß ASTM D2979-01, wobei der Durchmesser des Edelstahlstempels 32 mm beträgt und die konstante Anfahrgeschwindigkeit auf die Probe bei 10 mm/min liegt.
